**Europäisches Patentamt**

**European Patent Office**

**Office européen des brevets**

(19)

(11) Veröffentlichungsnummer: **0 190 373**
**B1**

(12) # EUROPÄISCHE PATENTSCHRIFT

(45) Veröffentlichungstag der Patentschrift:
02.08.89

(51) Int. Cl.⁴: **H 01 H 71/02, H 01 B 1/04**

(21) Anmeldenummer: **85101091.8**

(22) Anmeldetag: **02.02.85**

(54) Schnellbefestigungsvorrichtung für Schütze.

(43) Veröffentlichungstag der Anmeldung:
**13.08.86 Patentblatt 86/33**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**EP-A-0 060 909**
**DE-A-2 241 219**
**DE-A-2 803 115**
**DE-B-1 113 516**
**FR-A-1 523 308**

(73) Patentinhaber: **Square D Starkstrom GmbH, D-5277 Marienheide- Rodt (DE)**

(72) Erfinder: **Lemmer, Helmut, Bleibergstrasse 16, D-5277 Marienheide- Kalsbach (DE)**

(74) Vertreter: **Köhne, Friedrich, Dipl.- Ing., Postfach 250265 Lothringer Strasse 81, D-5000 Köln 1 (DE)**

EP 0 190 373 B1

LIBER, STOCKHOLM 1989

## Beschreibung

Die Erfindung bezieht sich auf eine Schnellbefestigungsvorrichtung für Schütze, insbesondere Kleinschütze, auf einer Tragschiene mit einer lösbaren Bodenplatte, an deren Innenseite der Kern eines Magnetsystems befestigt ist, wobei einerseits das Schütz auf der Tragschiene mittels federnd elastischer Stege und andererseits die Bodenplatte im Schützengehäuse mittels ausgeformter Stege befestigt ist und wobei die federnd elastischen Stege mit nach innen ragenden Nasen um die Ränder der Tragschiene greifen und derart einander zugeordnet sind, daß beim Einsetzen eines Werkzeuges die Bodenplatte festgehalten und das Schütz von der Tragschiene entriegelbar ist.

Schütze sind vielfach so aufgebaut, daß im Oberteil des Schützengehäuses ein Kontaktsystem mit von außen zugänglichen Anschlußschrauben angeordnet ist, welches mit dem beweglichen Anker eines Magnetsystems verbunden ist. Im unteren Teil des Gehäuses ist die Spule und der Kern des Magnetsystems untergebracht, wobei die Spule und Kern mit einer von dem Schützengehäuse lösbaren Bodenplatte verbunden sind. Die Spule und der Kern können mit der Bodenplatte unten in das Schützengehäuse eingeschoben werden. Wenn z. B. eine Spule ausgetauscht werden soll, so kann man das Schütz von einer Montageplatte oder meist von einer Tragschiene, auf der eine Vielzahl von Schützen dicht nebeneinander angeordnet sind, abmontieren, so daß dann die Spule herausgenommen werden kann.

Zu dieser Schnellbefestigung der Schütze benötigte man bisher aber eine zusätzliche Befestigungsplatte, die einmal an der Unterseite des Schützengehäuses befestigt war und die Lage der Bodenplatte und damit der Spule und des Kernes sicherte und die zum anderen mit besonderen Schnellbefestigungsvorrichtungen, wie z. B. federbelasteten Schiebern mit Verriegelungsvorrichtungen, versehen war. In Anbetracht der großen Stückzahlen von Schützen, die in der Praxis benötigt werden, und der dadurch gegebenen Massenfertigung, bedeutet diese Befestigungsplatte mit ihren Verriegelungsvorrichtungen besonders bei Kleinschützen einen großen Fertigungs-, Arbeits- und Materialaufwand.

Eine zu Anfang angegebene Schnellbefestigungsvorrichtung, von der bei der Erfindung ausgegangen wird, ist aus der EP-A-0 080 909 bekannt. Bei dieser bekannten Konstruktion eines Relais bzw. eines kleinen Schützes ist innerhalb des Gehäuses ein Magnetsystem untergebracht. Eine zusätzliche Befestigungsplatte ist hierbei nicht vorgesehen. Die Bodenplatte dieses Gerätes ist einmal an einer Tragschiene und zum anderen an dem Gerätegehäuse befestigbar. Die Befestigung an der Tragschiene erfolgt über rahmenartige Bauteile, die an der Bodenplatte angeformt sind und die an ihren äußeren Enden nach innen ragende nasenförmige Leisten aufweisen, die in montiertem Zustand um die Ränder der Tragschiene greifen. Wenn diese Bauteile von der Tragschiene gelöst werden, bleibt die Grundplatte in dem Gehäuse festgehalten. Diese Halterung erfolgt aber durch nach außen ragende Vorsprünge der Grundplatte, die in entsprechende Löcher der Gehäusewände eingreifen. Die Löcher und demgemäß die Vorsprünge sind aber den Seitenwänden des Gerätegehäuses zugeordnet, die senkrecht bzw. quer zur Tragschiene verlaufen. Wenn mehrere Geräte dicht nebeneinander auf der Tragschiene befestigt sind, ist es nicht möglich, zum erleichterten Auswechseln von Innenteilen des Gerätes, insbesondere der Spule, die Bodenplatte von dem Gehäuse in einfacher Weise zu lösen, zumindest ist immer eine vollständige Demontage des Gerätes erforderlich. Selbst nach Demontage des Gerätes ist das Austauschen der Spule des Magnetsystems erschwert.

Der Erfindung liegt die Aufgabe zugrunde, eine Schnellbefestigungsvorrichtung zu schaffen, die bei einfacher materialsparender Konstruktion eine einfache Montage und Demontage des Gerätes und vor allem ein einfaches Austauschen der Spule des Magnetsystems gestattet.

Die Aufgabe wird erfindungsgemäß dadurch gelöst, daß die Spule des Magnetsystems dem Kern zugeordnet an der Bodenplatte befestigt ist, daß die Stege an zwei gegenüberliegenden Seitenwänden des Schützengehäuses angeformt sind und je aus drei nebeneinander verlaufenden Stegteilen bestehen, die durch Schlitze getrennt sind, und daß die beiden äußeren Stegteile durch einen nach außen vorstehenden Bügel miteinander verbunden sind, so daß zwischen dem Bügel und dem mittleren Stegteil ein Spalt zum Einsetzen des Werkzeuges vorhanden ist.

Vorteilhafte Ausgestaltungen der Erfindung ergeben sich aus den Unteransprüchen.

In der Zeichnung ist ein Ausführungsbeispiel eines Schützes im Schema dargestellt und zwar zeigen

Figur 1 eine Seitenansicht auf ein Schütz mit Schnellbefestigungsvorrichtung,

Figur 2 eine Ansicht auf die Unterseite des Schützes gemäß Figur 1,

Figur 3 eine perspektivische Ansicht des Schützes gemäß Figur 1, wobei die Spule mit dem Spulenkörper und der flanschartigen Bodenplatte nach unten herausgenommen gezeichnet ist,

Figur 4 einen Querschnitt durch eine Tragschiene sowie durch das Unterteil des Schützes mit Schnellbefestigungsvorrichtung in vergrößertem Maßstab,

Figur 5 eine Ansicht auf die Schnellbefestigungsvorrichtung gemäß Linie V-V in Figur 4 und

Figur 6 einen Querschnitt gemäß Fig. 4, jedoch in einer anderen Stellung.

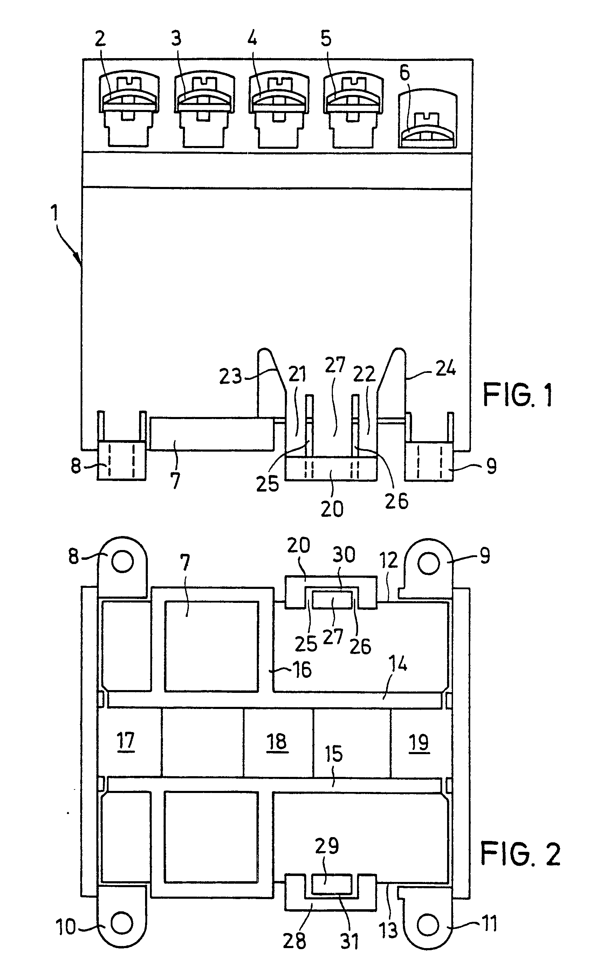

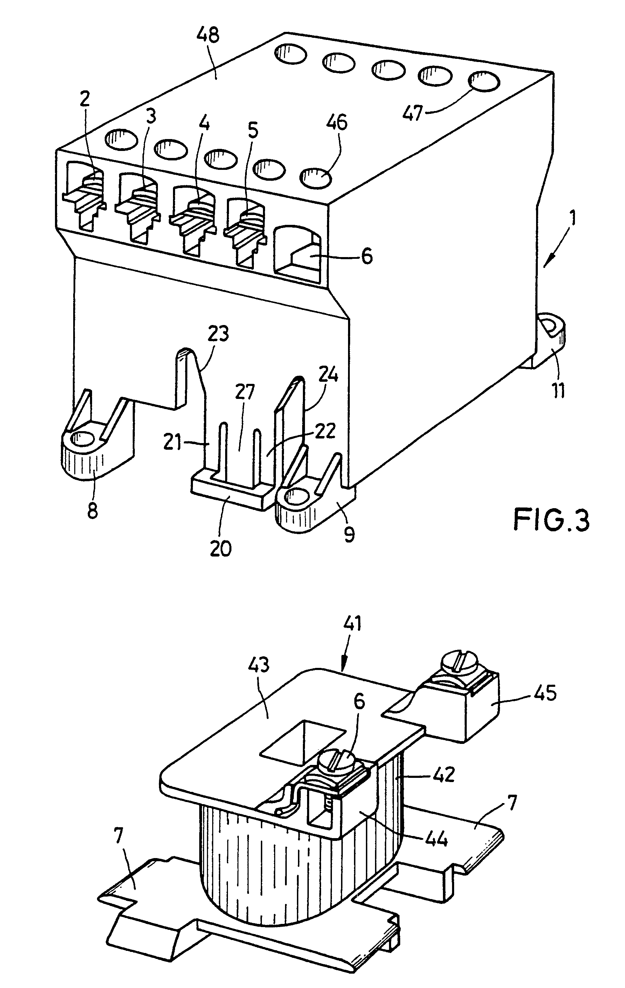

Bei dem in der Zeichnung als Ausführungsbeispiel dargestellten Schütz handelt es sich um ein Gerät mit genormter Breite. Die Erfindung ist sinngemäß aber auch auf andere Schütze anwendbar, insbesondere auf schmale Schütze, die halb so breit sind wie das Schütz nach Figur 1. Bei dem Schütz nach Figur 1 ist im Oberteil des Schützengehäuses eine nicht gezeichnete Kontaktvorrichtung in an sich bekannter Weise untergebracht, die mit den Anschlußklemmen 2, 3, 4 und 5 elektrisch verbunden ist. Daneben etwas versetzt nach unten befindet sich eine weitere Anschlußklemme 6, die als Spulenanschluß dient. Auf der gegenüberliegenden parallellaufenden Seite des Schützes, die spiegelbildlich gleich ist mit der Ansichtsseite nach Figur 1, befinden sich entsprechende weitere Anschlußklemmen. Oberhalb dieser Anschlußklemmen befinden sich im Deckel 48 des Schützes Bohrungen 46 und 47, durch welche ein Schraubendreher hindurchgesteckt und die Anschlußschrauben festgezogen oder gelöst werden können. Mit dem Kontaktsystem ist in bekannter Weise ein beweglicher Anker eines Magnetsystems wirkungsmäßig verbunden. Das Schützengehäuse wird auf der Unterseite durch eine Bodenplatte 7 abgeschlossen. Diese Bodenplatte 7 ist als fester flanschartiger Bestandteil des Spulenkörpers 41 ausgebildet, wie insbesondere aus dem unteren Teil der Figur 3 zu erkennen ist. Die Spule 42 wird also einerseits durch die flanschartige Bodenplatte 7 und andererseits durch den Flansch 43 des Spulenkörpers begrenzt. Vorteilhaft besitzt die Spule zwei feststehende elektrische Anschlüsse 44 und 45, die am oberen Ende je eine der beiden Anschlußklemmen tragen, so daß diese zusammen mit der Spule in das Schützengehäuse eingeführt und in die Stellung gemäß Fig. 1 gebracht werden können. Wenn beispielsweise eine Spule ausgewechselt werden soll, wird die Spule mit dem beschriebenen Spulenkörper 41 und den Anschlußklemmen aus dem Schützengehäuse herausgezogen, wie weiter unten noch näher erläutert wird.

An den Ecken des Schützengehäuses sind vier nach außen ragende Stützen 8, 9, 10 und 11 angeformt, die mit Löchern versehen sind, so daß das Schütz auch herkömmlich auf einer Montageplatte befestigt werden kann.

An zwei gegenüberliegenden Seitenwänden des Gehäuses des Schützes 1, von welchen in Fig. 1 eine Seitenwand sichtbar ist, sind nach unten ragende elastische Stegteile 21, 22, 27 bzw. 29 angeformt, welche auf den Innenflächen Nasen 32, 33, 34 und 35 aufweisen, von welchen mindestens je eine Nase 34 und 35 hinter die benachbarten Ränder 12 und 13 der Bodenplatte 7 und mindestens je eine andere Nase 32 und 33 hinter die benachbarten Längskanten 37 und 38 der Tragschiene 36, die vorteilhaft als Normtragschiene ausgebildet ist, greifen können. Die Stegteile sind derart ausgebildet und einander zugeordnet, daß beim Einsetzen eines Werkzeuges, insbesondere eines Schraubendrehers, die Bodenplatte 7 festgehalten und das Schütz 1 von der Tragschiene 36 entriegelt werden kann.

Eine vorteilhafte Ausgestaltung besteht darin, daß an jeder der beiden beschriebenen Seitenwände drei nebeneinander verlaufende Stegteile 21, 22 und 27 vorgesehen sind, die durch die in Fig. 1 sichtbaren Schlitze 23, 24, 25 und 26 voneinander getrennt und dadurch federnd elastisch sind. Die beiden äußeren Stegteile 21 und 22 sind durch einen nach außen vorstehenden Bügel 20 bzw. 28 miteinander verbunden, wobei der Bügel so ausgebildet ist, daß zwischen ihm und dem betreffenden Mittelsteg 27 bzw. 29 ein Spalt 30 bzw. 31 entsteht, in den man einen Schraubendreher von oben einsetzen kann, mit einer Wirkungsweise, die weiter unten noch näher erläutert wird.

Eine weitere vorteilhafte Ausgestaltung ergibt sich dadurch, daß das mittlere Stegteil 27 bzw. 29 jeweils diejenige Nase 35 aufweist, die zum Festhalten der Bodenplatte 7 bestimmt ist. Die beiden äußeren durch je einen Bügel 20 bzw. 28 verbundenen Stegteile 21, 22 tragen diejenigen Nasen 32 und 33, die hinter die Längskanten 37 und 38 der Tragschiene greifen.

Von Vorteil ist ferner, daß die beiden äußeren Stegteile 21 und 22 zusätzliche Nasen entsprechend den Nasen 34 und 35 der beiden mittleren Stegteile 27, 29 aufweisen, die hinter die Ränder 12 und 13 der Bodenplatte 7 greifen.

Wie in den Figuren 2, 4 und 6 schematisch dargestellt ist, besitzt die Bodenplatte 7 auf der Unterseite längs- und querverlaufende Verstärkungsrippel 14, 15 und 15, wobei beispielsweise die Verstärkungsrippen 16 oder andere geeignete Abstandshalter auf der Oberseite der Tragschiene 36 aufliegen, so daß das Schütz in eingerastetem Zustand der beschriebenen Nasen sicher in beiden Vertikalrichtungen auf der Tragschiene gehalten ist.

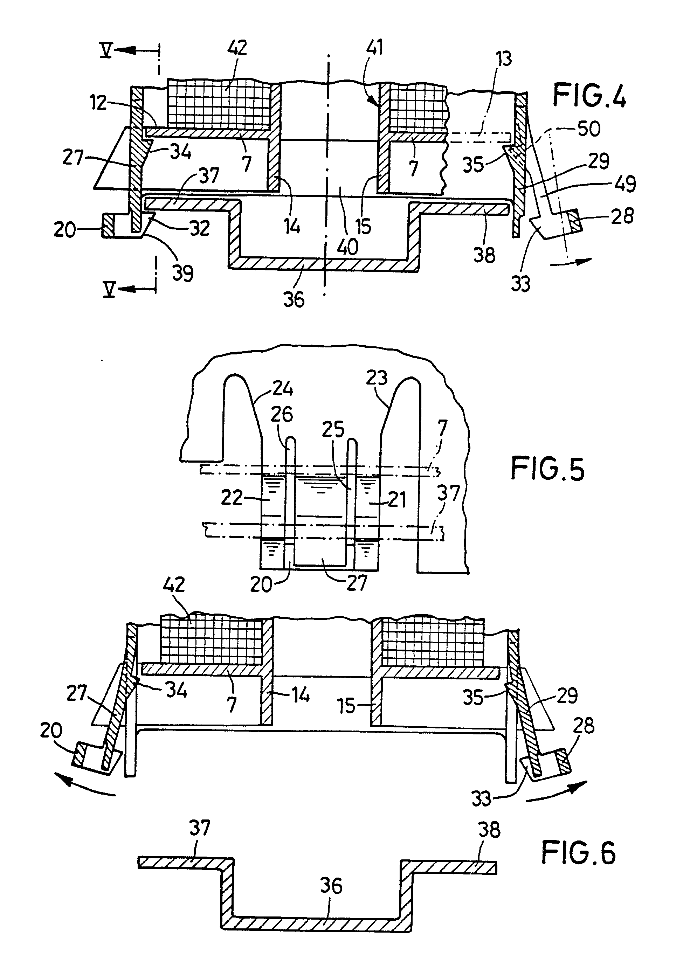

Die Bodenplatte 7 kann noch drei recheckige Löcher 17, 18 und 19 erhalten, wenn man den Kern des Magnetsystems mit seinen drei Schenkeln unten durch die Bodenplatte hindurchführen will und der parallel zur Bodenplatte verlaufende Steg des Kernes zwischen den Verstärkungsrippen 14 und 15 untergebracht werden soll. Ein Teil des Kernes 40 ist in Figur 4 schematisch dargestellt. Zur Erleichterung der Montage können die oben erläuterten Nasen nach unten hin abgeschrägt sein. Eine solche Abschrägung ist an der Nase 32 mit dem Bezugszeichen 39 versehen.

Die Wirkungsweise der oben erläuterten Schnellbefestigungsvorrichtung ist im wesentlichen folgende. Zur besseren Veranschaulichung ist in Figur 4 der Vertikalschnitt durch die Mitte der mittleren Stegteile 27 und 29 und demgemäß durch die Bügel 20 und 28 gelegt, so daß im linken Teil des Bildes die beiden seitlichen Stegteile 21 und 22, die durch den Bügel 20 verbunden sind, nicht sichtbar sind. Im rechten Teil der Firgur 4 ist der Bügel 28 z. B. mittels eines nicht gezeichneten Schraubendrehers in Richtung des Pfeiles übertrieben gezeichnet nach außen geschwenkt, so daß hier nur das eine äußere Stegteil 49 sichtbar ist.

Von wesentlicher Bedeutung ist nun folgendes. Wenn die flanscharte Bodenplatte 7, die wie erläutert einstückig mit dem Spulenkörper 41 ausgebildet ist und auf welcher die Spule 42 und der Kern des Magnetsystems montiert sind, in das Schützengehäuse eingeschoben wird, so federn sämtliche Stegteile mit ihren Nasen 32, 33 sowie 34 und 35 und den oberen zusätzlichen Nasen 50 an den äußeren Stegteilen etwas zurück, bis die Bodenplatte 7 gemäß Figur 4 in Betriebsstellung gebracht ist und durch die Nasen 34, 35 und 50 sämtlicher Stegteile gehalten ist. Es versteht sich, daß in dieser Betriebsstellung der Bügel 28 mit den beiden äußeren Stegteilen 49 und den Nasen 50 entgegen der Darstellung in Figur 4 einwärts geschwenkt ist wie der Bügel 20 und sämtliche Stegteile im linken Teil der Figur 4. Sodann kann die Befestigung des Schützes auf der Tragschiene 36 erfolgen, was ebenfalls sehr einfach vonstatten geht, da man das Schütz nur von oben aufzuschieben braucht. In diesem Falle federn aber nur die äußeren Stegteile 21, 22 bzw. 49 mit ihren Bügeln 20 bzw. 28 etwas nach außen aus, während die mittleren Stegteile 27 und 29, die nach dem unteren Ende zu keine Nasen tragen, in ihrer Stellung verbleiben und die Halterung der flanschartigen Bodenplatte 7 durch die Nasen 34 und 35 gewährleisten.

Wenn nun ein Schütz von der Tragschiene 36 abgenommen werden soll, so kann man einen Schraubendreher je nach den räumlichen Gegebenheiten entweder in der Spalt 30 oder in den Spalt 31 einsetzen. Wenn man nun den Schraubendreher dreht, so wird der Bügel 20 oder 28 mit den beiden jeweiligen äußeren Stegteilen 21, 22 bzw. 48 in Richtung des Pfeiles gemäß Figur 4 etwas nach außen geschwenkt, bis die beiden Nasen 32 bzw. 33 der jeweiligen äußeren Stegteile von der Längskante 37 bzw. 38 der Tragschiene 36 entriegelt sind, so daß man das Schütz ggfs. unter leichtem Schwenken nach oben abnehmen kann. Wie erläutert, ist in Figur 4 der Bügel 28 in dieser Schwenkstellung gezeichnet. Wie gesagt ist die Schwenkstellung des Bügels etwas übertrieben dargestellt, um die Wirkung besser zu veranschaulichen. In Wirklichkeit biegen sich die beiden äußeren Stegteile 49 mit dem Bügel 28 so weit aus, daß die oberen Nasen 50 weitgehend in Verriegelungsstellung bleiben. Weichtig dabei ist vor allem, daß durch die Drehbewegung des Schraubendrehers jeweils das mittlere Stegteil 27 oder 29 nach innen gedrückt wird, wodurch die Verriegelungsstellung der Bodenplatte 7 gewährleistet ist. Bei der Demontage des Schützes von der Tragschiene 36 kann die Bodenplatte 7 mit dem erläuterten Teil des Magnetsystems nicht nach unten herausfallen. Wenn man dann später allerdings beispielsweise die Spule 42 austauschen will, so braucht man nur auf der einen Seite oder auch auf beiden Seiten sämtliche erläuterten Stegteile nach außen zu biegen, wie es in Figur 6 dargestellt ist, so daß vor allem auch die Nasen 34 und 35 der mittleren Stegteile 27 und 29 nach außen geschwenkt sind, so daß dann die Bodenplatte 7 zum Herausnehmen freigegeben ist. Die erfindungsgemäße Schnellbefestigungsvorrichtung ist somit sehr montagefreundlich und kostengünstig.

## Patentansprüche

1. Schnellbefestigungsvorrichtung für Schütze, insbesondere Kleinschütze, auf einer Tragschiene (36, 37, 38), mit einer lösbaren Bodenplatte (7), an deren Innenseite der Kern (40) eines Magnetsystems befestigt ist, wobei einerseits das Schütz auf der Tragschiene mittels federnd elastischer Stege und andererseits die Bodenplatte im Schützengehäuse mittels ausgeformter Stege befestigt ist und wobei die Stege mit nach innen ragenden Nasen (32, 33, 34, 35) um die Ränder der Tragschiene bzw. hinter die benachbarten Ränder der Bodenplatte greifen und derart einander zugeordnet sind, daß beim Einsetzen eines Werkzeuges die Bodenplatte (7) festgehalten und das Schütz von der Tragschiene (36, 37, 38) entriegelbar ist, dadurch gekennzeichnet, daß die Spule (42) des Magnetsystems dem Kern (40) zugeordnet an der Bodenplatte (7) befestigt ist, daß die Stege an zwei gegenüberliegenden Seitenwänden des Schützengehäuses (1) angeformt sind und je aus drei nebeneinander verlaufenden Stegteilen (21, 22, 27) bestehen, die durch Schlitze (25, 26) getrennt sind, und daß die beiden äußeren Stegteile (21, 22) durch einen nach außen vorstehenden Bügel (20, 28) miteinander verbunden sind, so daß zwischen dem Bügel (20, 28) und dem mittleren Stegteil (27) ein Spalt zum Einsetzen des Werkzeuges vorhanden ist.

2. Schnellbefestigungsvorrichtng nach Anspruch 1, dadurch gekennzeichnet, daß das mittlere Stegteil (27; 29) eine Nase (35) zum Festhalten der Bodenplatte (7) aufweist, und daß die beiden äußeren durch den Bügel (20; 28) verbundenen Stegteile (21, 22) die Nasen (32, 33) tragen, die hinter die Längskanten (37, 38) der Tragschiene (36) greifen.

3. Schnellbefestigungsvorrichtung nach Anspruch 2, dadurch gekennzeichnet, daß die beiden äußeren Stegteile (21, 22) zusätzliche Nasen (50) aufweisen, die hinter die Ränder (12, 13) der Bodenplatte (7) greifen.

4. Schnellbefestigungsvorrichtung nach einem der vorhergehenden Ansprüche, dadurch gekennzeichnet, daß die Bodenplatte (7) als fester flanschartiger Bestandteil des Spulenkörpers (41) ausgebildet ist.

## Claims

1. A quick-action fastening device for contactors, in particular miniature contactors, on a bearing rail (36, 37, 38), with a detachable bottom plate (7), to the inner side of which the core (40) of a magnetic system is attached, whereby the contactor is attached to the bearing rail by means of spring-action elastic arms, on the one hand, and the bottom plate is attached in the contactor housing by means of shaped arms, on the other hand, and whereby the arms with the inwardly pointing projections (32, 33, 34, 35) grip round the edges of the bearing rail and behind the neighbouring edges of the bottom plate and are arranged relative to one another in such a way that, when a tool is inserted, the bottom plate (7) is held fast and the contactor is releasable from the bearing rail (36, 37, 38), <u>characterised in that</u> the coil (42) of the magnetic system assigned to the core (40) is attached to the base plate (7), that the arms are integrally moulded on two opposite side walls of the contactor housing (1) and each consists of three arm sections (12, 22, 27) running beside one another which are separated by slits (25, 26), and that the two outer arm sections (21, 22) are connected together by a bow (20, 28) projecting outwards, so that a gap for inserting a tool is provided between the bow (20, 28) and the centre arm section.

2. A quick-action fastening device according to claim 1, characterised in that the centre arm section (27; 29) has a projection (35) for holding fast the bottom plate (7), and that the two outer arm sections (21, 22) connected by the bow (20; 28) bear the projections (32, 33) which grip behind the longitudinal edges (37, 38) of the bearing rail (36).

3. A quick-action fastening device according to claim 2, characterised in that the two outer arm sections (21, 22) have additional projections (50) which grip behind the edges (12, 13) of the bottom plate (7).

4. A quick-action fastening device according to any one of the preceding claims, characterised in that the bottom plate (7) is designed as a fixed flange-like component of the coil former (41).

## Revendications

1. Dispositif de fixation rapide pour des interrupteurs de protection, notamment de petits interrupteurs de protection, sur un rail porteur (36, 37, 38 ), comportant une plaque de base démontable (7) sur le côté intérieur de laquelle est fixé le noyau (40) d'un système magnétique, l'interrupteur de protection étant fixé d'un côté sur le rail porteur à l'aide de languettes élastiques et souples et de l'autre côté la plaque de base étant fixée dans le boîtier à interrupteurs à l'aide de languettes profilées, les languettes pourvues d'ergots (32, 33 ) faisant saillie vers l'intérieur s'accrochant autour des bords (34, 35) du rail porteur ou bien en arrière des bords adjacents de la plaque de base et étant mutuellement associées de telle sorte que, lors de l'engagement d'un outil, la plaque de base (7) soit maintenue immobile et l'interrupteur de protection puisse être déverrouillé du rail porteur (36, 37, 38), caractérisé en ce que la bobine (42) du système magnétique, associée au noyau (40), est fixée sur la plaque de base (7), en ce que les languettes sont formées sur deux parois latérales mutuellement opposées du boîtier à interrupteurs (1) et se composent chacune de trois parties (21, 22, 27) placées l'une à côté de l'autre et qui sont séparées par des fentes (25, 26) et en ce que les deux parties extérieures de languette (21, 22) sont reliées entre elles par un étrier (20, 28) faisant saillie vers l'extérieur de telle sorte qu'il existe entre l'étrier (20, 28) et la partie centrale de languette (27) un intervalle servant à l'engagement de l'outil.

2. Dispositif de fixation rapide selon la revendication 1, caractérisé en ce que la partie centrale de languette (27; 29 ) comporte un ergot (35) pour maintenir la plaque de base (7) et en ce que les deux parties extérieures de languette (21, 22), reliées par l'étrier (20; 28), portent les ergots (32, 33) qui s'accrochent en arrière des bords longitudinaux (37, 38) du rail porteur (36).

3. Dispositif de fixation rapide selon la revendication 2, caractérisé en ce que les deux parties extérieures de languette (21, 22) comportent des ergots additionnels (50) qui s'accrochent en arrière des bords (12, 13) de la plaque de base (7).

4. Dispositif de fixation rapide selon une des revendications précédentes, caractérisé en ce que la plaque de base (7) est agencée comme un composant fixe, en forme de flasque du corps de bobine (41).

FIG. 1

FIG. 2

48

2

3

4

5

46

47

1

23

24

27

21

22

8

20

9

11

6

FIG.3

41

43

6

45

42

7

44

7

7

FIG.4

FIG.5

FIG.6